# EUROPÄISCHE PATENTSCHRIFT

(11) **EP 4 465 465 B1**
(45) Veröffentlichungstag und Bekanntmachung des Hinweises auf die Patenterteilung: **15.07.2026**
(21) Anmeldenummer: 24175467.0
(22) Anmeldetag: 13.05.2024
(51) Int. Cl.: H02G 9/10

(54) **SCHACHT**
SHAFT
PUITS

(30) Priorität: 17.05.2023 AT 662023
(43) Veröffentlichungstag der Anmeldung: 20.11.2024
(73) Patentinhaber: ELDI GmbH, 1190 Wien (AT)
(72) Erfinder: Pecnik, Marjan, 1230 Domzale (SI); Taptic, Alexej, 83102 Bratislava (SK); Kastner, Ludwig, 1190 Wien (AT)
(74) Vertreter: Ellmeyer, Wolfgang

(56) Entgegenhaltungen:
- EP-A1- 0 863 263
- EP-B1- 3 536 860
- AU-A1- 2013 269 711
- DE-B3- 10 314 897
- DE-B3- 102012 101 366
- DE-U1- 202007 014 465
- GB-A- 2 404 409
- JP-B2- 3 108 565

## Beschreibung

Die Erfindung betrifft einen Schacht mit einer Bodenplatte, Schachtwänden und einer Deckelplatte zum Verschließen des Schachts, wobei die Schachtwände aus einer Vielzahl von Rasterwandelementen, die in Zeilen übereinander angeordnet und aus einem modulartigen Baukastensystem auswählbar sind, zusammengesetzt sind, wobei ein Teil der Rasterwandelemente zumindest eine Rohreinführungsöffnung aufweist, sodass die Position, Anzahl und Größe von Rohreinführungen in den Schachtwänden durch entsprechende Anordnung der Rasterwandelemente frei wählbar ist, wobei mehrere umlaufende Verbindungsrahmen vorgesehen sind, die zueinander höhenversetzt angeordnet sind, wobei die Rasterwandelemente jeweils an ihrer Oberseite und ihrer Unterseite mit einem der Verbindungsrahmen verbunden sind, wobei die Rasterwandelemente durch Steckverbindungen mit den Verbindungsrahmen verbunden sind, und wobei die Rasterwandelemente jeweils an ihrer Oberseite und an ihrer Unterseite Steckverbinder aufweisen, die in passende Steckaufnahmen der Verbindungsrahmen gesteckt sind.

Schächte dieser Art ermöglichen es, unterirdisch verlegte Leitungen zugänglich zu machen, um technische Einbauten, z.B. Kabelmuffen, Kabelabzweigungen oder andere technische Komponenten vorzusehen.

Bisher bekannte Schächte werden durch Anordnen von Schachtbauteilen errichtet, für welche die Lagerhaltung einen sehr hohen Aufwand erfordert und daraus eine Liste mit einer großen Anzahl an Artikelnummern resultiert, sodass für die die Bauarbeiten durchführenden Personen oft Unklarheit herrscht, welche Teile vor Ort benötigt werden und es sehr leicht zu falschen Bestellungen kommen kann.

Bisherige Lösungsansätze von modulartig zusammensetzbaren Schächten sind daran gescheitert, dass die Belastbarkeit dieser Schächte in der Praxis nicht ausreichend gewährleistet werden konnte, da diese überwiegend aus Kunststoffspritzgussteilen hergestellt werden, um Langlebigkeit, geringe Materialkosten und geringes Gewicht zu ermöglichen.

In der DE 10 2012 101 366 B3 ist ein Unterflurschacht mit einem trogförmigen Hauptkörper gezeigt, der von einer Bodenplatte aus durch lagenweise aufgesetzte Wandplatten unter Verwendung von über die ganze Schachtlänge und Schachtbreite sich erstreckenden Wandleisten aufgebaut ist, die jeweils gegenüber der nächstniedrigen Lage mittels Drehriegeln verriegelt werden, wobei alle Wandplatten durchstoßbare Durchgangsöffnungen für Erdkabel aufweisen. Durch die Festlegung der Wandplatten mittels Drehriegeln und eingeschobenen Versteifungsrohren ergibt sich ein relativ hoher Montageaufwand mit vielen Einzelteilen, wobei der modulare Aufbau hauptsächlich in vertikaler Richtung variierbar ist, während in horizontaler Richtung die Maße durch die Länge der Wandleisten vorgegeben ist, die nicht veränderbar ist.

Aus der JP3108565B2 geht eine hohlzylindrische Schachtkonstruktion hervor, die aus mehreren massiven ringförmigen Fertigbeton-Elementen besteht, die in Höhenrichtung über Steckverbindungen an der Oberseite und Unterseite übereinandergesetzt sind. Es sind zwar seitliche Rohreinführungen vorgesehen, welche aber nicht variabel angeordnet werden können, sodass eine freie Auswahl von Einführungen nicht vorgenommen werden kann.

Die EP 3 536 860 A1 zeigt übereinander angeordnete rechteckförmige Wandrahmen mit auswählbaren Kabeldurchführungslöchern, die zu einem Schacht zusammengesetzt sind, wobei die Wandrahmen in ihren Dimensionen fest vorgegeben sind und keine Variationen in der horizontalen Ebene zulassen. Zwischen den jeweiligen Wandrahmen können Neigungskorrekturrahmen eingefügt werden, um eine Schieflage des Schachts ausgleichen zu können, ohne dabei eine stabilisierende Wirkung auf die gesamte Anordnung auszuüben.

Ziel der Erfindung ist es daher, einen verbesserten Schacht anzugeben, mit dem die Lagerhaltungskosten reduziert und der planungstechnische Aufwand bedeutend verringert werden kann und der zugleich alle Erfordernisse der statischen und dynamischen Belastbarkeit erfüllt.

Eine wichtige Aufgabe der Erfindung besteht ferner darin, eine ausreichende Stabilität des Verbundes aus Rasterwandelementen und Verbindungsrahmen zu erzielen, da sich z.B. aus dem Straßenverkehr sehr hohe auftretende Lasten ergeben können.

Die Aufgabe wird durch die Merkmale des ersten Anspruchs gelöst.

Erfindungsgemäß ist vorgesehen, dass die umlaufenden Verbindungsrahmen einen H-förmigen Querschnitt mit zwei Flanschwänden und einem Steg umfassen, wobei die Flanschwände eine obere und eine untere Steckaufnahme ausbilden, die durch den Steg voneinander getrennt sind, wobei die Steckverbinder der Rasterwandelement-Unterseite in die obere Steckaufnahme steckbar sind und die Steckverbinder der Rasterwandelement-Oberseite in die untere Steckaufnahme steckbar sind.

Durch die Anwendung eines Baukastensystems kann auf eine komplizierte Lagerhaltung verzichtet und es können Rohreinführungen an jeder beliebigen Stelle des Schachtes angebracht werden. Die aus dem Baukastensystem auswählbaren Rasterwandelemente ermöglichen das Vorsehen von Rohreinführungen an der jeweils gewünschten Stelle, indem ein Rasterwandelement mit einer geeigneten Rohreinführungsgröße an dieser Position im Schacht eingebaut wird. Um eine ausreichend stabile Anordnung der Rasterwandelemente zu gewährleisten, sind erfindungsgemäß parallel zur Bodenplatte angeordnete, zueinander höhenmäßig versetzte Verbindungsrahmen vorgesehen, an denen die Rasterwandelemente während der Schachtherstellung befestigt werden.

In bevorzugter Weise sind die umlaufenden Verbindungsrahmen sowie die Rasterwandelemente aus Kunststoff gefertigt, es können im Rahmen der Erfindung aber auch andere Materialien zur Anwendung gelangen.

Um den Zusammenbau der Rasterwandelemente und der Verbindungsrahmen bei der Errichtung des erfindungsgemäßen Schachtes zu erleichtern, sind die Rasterwandelemente durch Steckverbindungen mit den Verbindungsrahmen verbunden, wobei die Verbindungsrahmen passende Steckaufnahmen aufweisen, sodass die Steckverbinder der Wandelemente mit den Steckaufnahmen der Verbindungsrahmen in Eingriff bringbar sind.

Die derart ausgebildeten Rasterwandelemente können beim Zusammenbau entsprechend den Anforderungen aus dem Baukastensystem ausgewählt und nacheinander an ihrer Unterseite in einen Verbindungsrahmen gesteckt werden. Sobald eine umlaufende Zeile von Rasterwandelementen in den jeweiligen Verbindungsrahmen eingesetzt ist, kann der in der Höhe nachfolgende Verbindungsrahmen mit seiner Unterseite auf die Oberseite der Rasterwandelemente aufgesteckt werden, welcher nunmehr an seiner Oberseite die Aufnahme für die nächste Zeile bildet. Da die Steckverbindung lösbar ist, kann der Aufbau des Schachtes später auch noch einmal geändert werden. Zugleich bietet die Steckverbindung zusammen mit dem Verbindungsrahmen ausreichende Belastbarkeit des Schachtes.

Es ist dabei vorgesehen, dass die Rasterwandelemente jeweils an ihrer Oberseite und an ihrer Unterseite Steckverbinder aufweisen, die in passende Steckaufnahmen der Verbindungsrahmen gesteckt sind.

Durch die dadurch erzielte form- und reibschlüssige Verbindung der Rasterwandelemente kann der Zusammenbau des erfindungsgemäßen Schachtes auf einfache und schnelle Weise erfolgen und dabei zugleich eine stabile Anordnung der Rasterwandelemente erzielt werden. Durch den sich daraus ergebenden Verbund von Verbindungsrahmen und Rasterwandelementen wird eine sehr hohe Belastbarkeit des erfindungsgemäßen Schachtes erreicht, da die zwischen den Zeilen der Rasterwandelemente angeordneten Verbindungsrahmen ein Ausweichen der Rasterwandelemente unter Druckbelastung verhindern.

Eine sehr hohe Belastbarkeit lässt sich dadurch erzielen, dass die umlaufenden Verbindungsrahmen erfindungsgemäß einen H-förmigen Querschnitt mit zwei Flanschwänden und einem Steg umfassen, wobei die Flanschwände eine obere und eine untere Steckaufnahme ausbilden, die durch den Steg voneinander getrennt sind. Der H-förmige Querschnitt sorgt einerseits für hohe Festigkeit bei geringem Gewicht und bietet auch eine sehr stabile Steckaufnahme für den Verbindungsrahmen.

Eine weitere Ausführungsform der Erfindung kann darin bestehen, dass die Steckverbinder dreieckförmig gewellt ausgebildet sind, wodurch ein stabiler Form- und Reibschluss mit der Aufnahme der umlaufenden Verbindungsrahmen bei geringem Gewicht erreicht werden kann. Eine Herstellung aus Kunststoff ist dadurch sehr leicht realisierbar.

Gemäß einer weiteren Ausführungsform der Erfindung kann an der außenseitigen Flanschwand des Verbindungsrahmens ein Versteifungselement vorgesehen sein, um die Belastbarkeit zu erhöhen.

In weiterer Ausbildung der Erfindung kann das Versteifungselement durch eine parallel zur außenseitigen Flanschwand angeordnete Versteifungswand ausgebildet sein, die durch einen Versteifungssteg mit der außenseitigen Flanschwand verbunden ist.

Diese Form der Versteifung erhöht die Belastbarkeit des Verbindungsrahmens und ist z.B. durch Spritzguss bei geringem Gewicht relativ leicht herstellbar.

Eine sehr hohe Stabilität bei geringem Gewicht lässt sich ferner dadurch erreichen, dass der Versteifungssteg dreieckförmig gewellt ist.

In manchen Rasterwandwandelementen kann zumindest eine der Rohreinführungsöffnungen oder ein Teil einer der Rohreinführungsöffnungen ausgenommen sein.

Um bestehende Leitungen und Kabel in den Schacht aufnehmen können, werden diese bei der Errichtung des erfindungsgemäßen Schachtes von der Seite her von Rasterwandelementen umgeben, wobei die Rohreinführungsöffnungen oder Teile der Rohreinführungsöffnungen einen kreisförmigen Rand bzw. einen teilkreisförmigen Rand, z.B. einen halbkreisförmigen Rand aufweisen können.

Nachfolgend wird die Erfindung anhand von Ausführungsbeispielen eingehend erläutert. Es zeigt dabei
Fig.1 eine Schrägansicht einer Ausführungsform eines erfindungsgemäßen Schachts;
Fig.2 eine Schrägansicht einer weiteren Ausführungsform eines erfindungsgemäßen Schachtes;
Fig.3 eine Schrägansicht von Bestandteilen einer Ausführungsform eines Baukastensystems zur Errichtung des erfindungsgemäßen Schachtes;
Fig.4 bis Fig.7 eine Rückansicht, Seitenansicht, Draufsicht und Schrägansicht einer Bodenplatten-Hälfte gemäß Fig.3;
Fig.8 bis 10 eine Schrägansicht, eine Draufsicht und eine Seitenansicht einer weiteren Bodenplatten-Hälfte gemäß Fig.3;
Fig.11 bis 14 eine Schrägansicht, Seitenansicht, Draufsicht und Stirnansicht eines Verbindungsrahmens gemäß Fig.3;

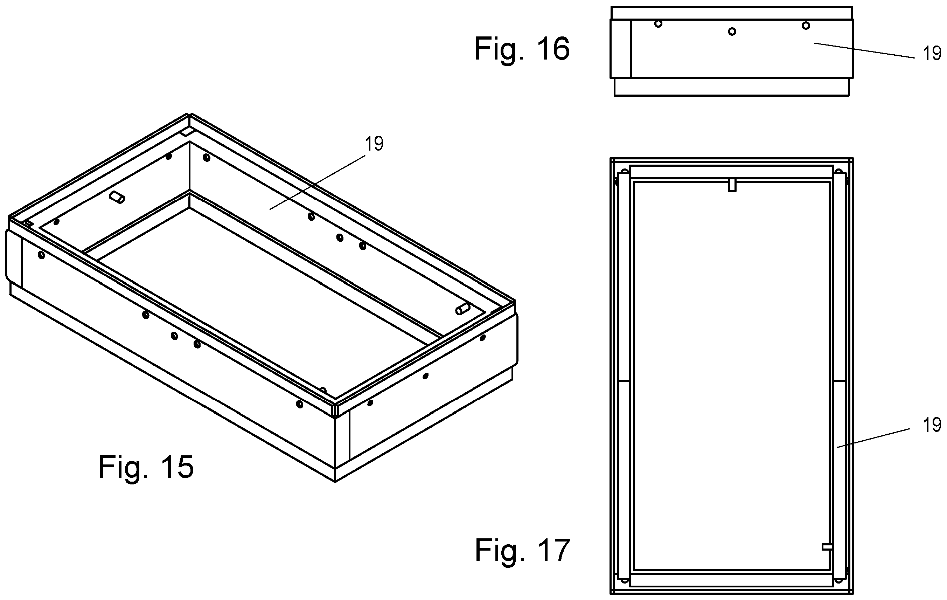

Fig.15 bis 17 eine Schrägansicht, Stirnansicht und eine Draufsicht auf einen Deckelrahmen der Ausführungsformen gemäß Fig.1 und 2;
Fig.18 bis 20 eine Seitenansicht, eine Draufsicht und einen Schnitt AA eines Rohreinführungszylinders mit abgestuftem Durchmesser.
Fig.21 und 22 jeweils ein Schrägriss einer weiteren Ausführungsform des erfindungsgemäßen Schachts;
Fig.23 eine Bodenplatte der Ausführungsform gemäß Fig.22;
Fig.24, 25 und 26 jeweils einen Schrägriss verschiedener Winkelteilrahmen des Baukastensystems zu Fig.21 und 22;
Fig.27 einen Schnitt BB durch den in Fig.28 gezeigten Schrägriss einer Ausführungsform eines Verbindungsrahmens;
Fig.29 einen Schrägriss der Bodenplatte gemäß Fig. 23 mit dem darauf aufgesetzten Verbindungsrahmen gemäß Fig.27 und 28;
Fig.30, 31, 32 und 33 jeweils Schrägrisse von unterschiedlichen Ausführungsformen von Rasterwandelementen des Baukastensystems zu Fig.21 und 22;
Fig. 34 einen Schrägriss einer Ausführungsform einer aus dem Baukastensystem zu Schächten gemäß Fig. 21 und 22 zusammengebauten Rasterwandelement-Zeile;
Fig. 35 einen Schrägriss einer weiteren Ausführungsform einer aus dem Baukastensystem zu Fig. 21 und 22 zusammengebauten Rasterwandelement-Zeile;
Fig.36 einen Schrägriss einer Ausführungsform einer Deckelplatte;
Fig.37, Fig.38 und Fig.40 jeweils einen Schrägriss von weiteren Elementen des Baukastensystems zu Fig.21 und 22; und
Fig.39, 41 und 42 jeweils einen Schrägriss von Rasterwandelementen des Bauskastensystems zu Fig.21 und 22;

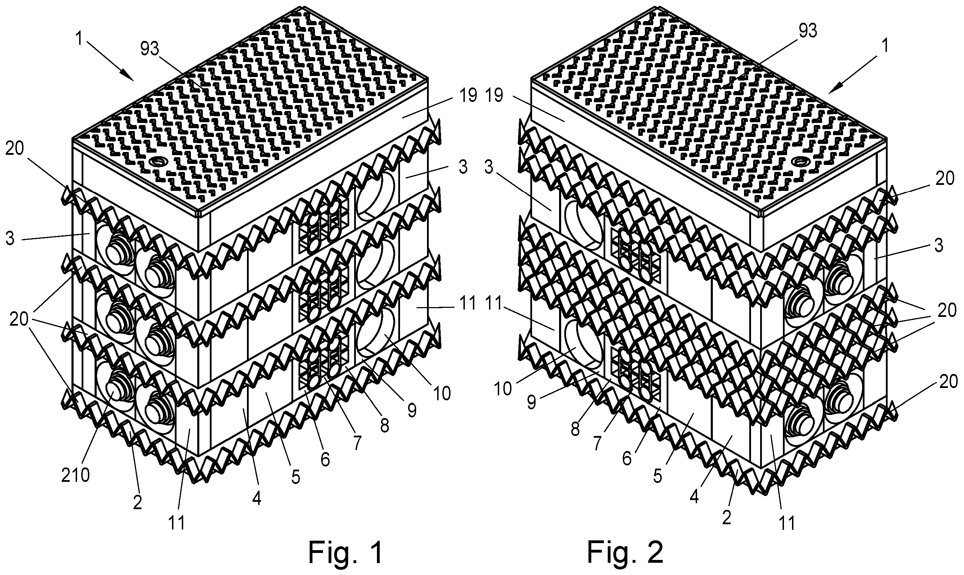

Fig. 1 zeigt einen Schacht 1 mit einer Bodenplatte 2, Schachtwänden 3 und einer Deckelplatte 93 zum Verschließen des Schachts 1, wobei auf die Schachtwände 3 an ihrer Oberseite ein Deckelrahmen 19 aufgesetzt ist, der die Deckelplatte 93 trägt.

Die Schachtwände 3 sind aus einer Vielzahl von Rasterwandelementen 4, 5, 6, 7, 8, 9, 10, 11, die aus einem modulartigen Baukastensystem ausgewählt sind, und vier Verbindungsrahmen 20 zusammengesetzt.

Fig.2 zeigt einen Schacht, der gegenüber dem in Fig.1 gezeigten Schacht in abgewandelter Form auf Basis desselben Baukastensystems zusammengesetzt ist. So sind aus Gründen der höheren Stabilität zwei bzw. drei Verbindungsrahmen 20 unmittelbar übereinander angeordnet.

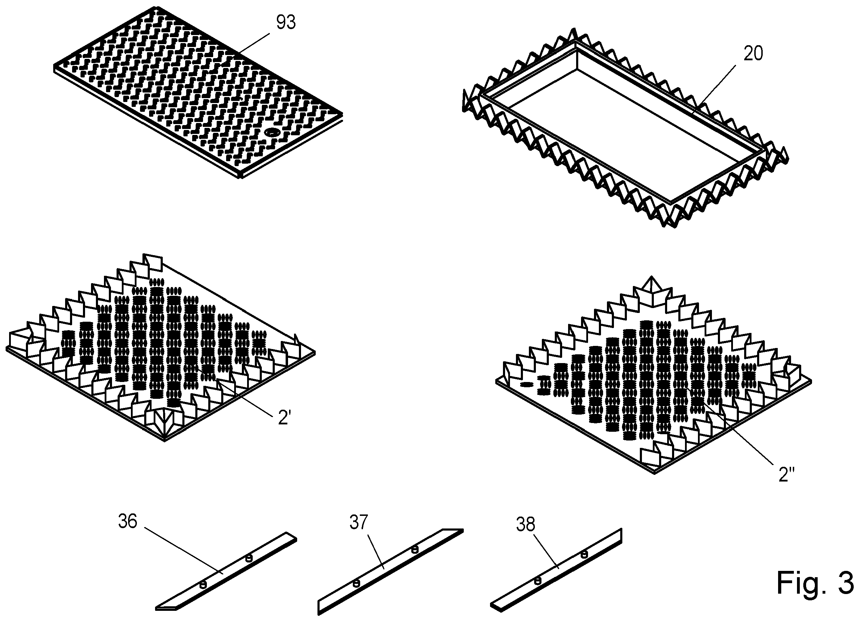

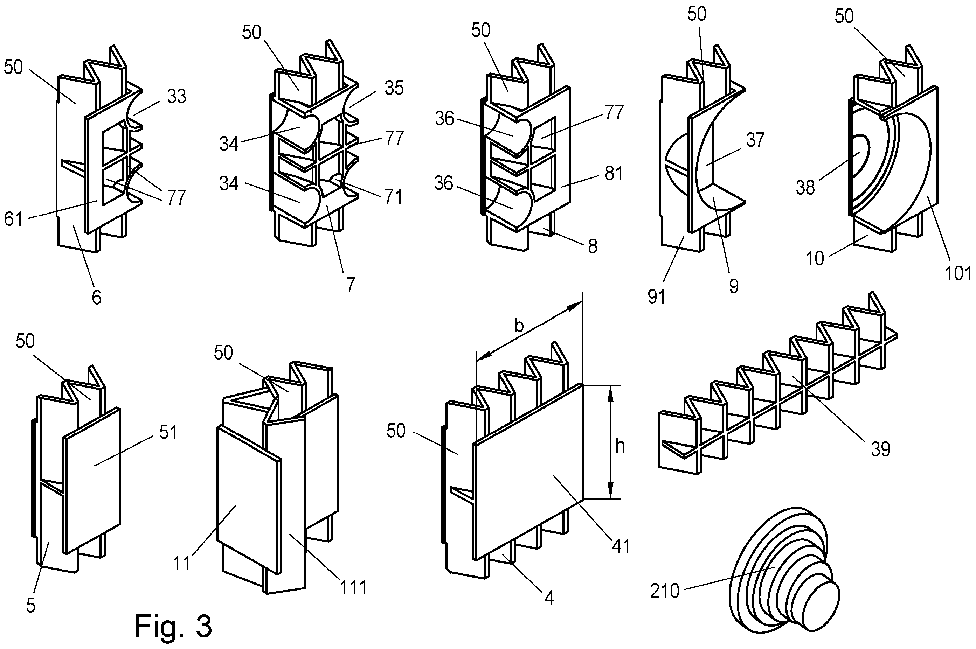

Bestandteile des modularen Baukastensystems der Ausführungsformen gemäß Fig.1 und 2 sind in Fig.3 dargestellt, wobei für jede Bauart eines Rasterwandelements aus Fig.1 und 2 jeweils eine Darstellung in der Fig. 3 gezeigt ist, während das modulare Baukastensystem jeweils mehrere Stück pro Bauart aufweist, um die Schachtwände 3 eines erfindungsgemäßen Schachts vollständig zusammensetzen zu können.

Das Rasterwandelement 4 ist ein Wandelement mit einer vorbestimmbaren Rastermaßbreite b und einer Einheitshöhe h, welche Maße an die jeweiligen Gegebenheiten angepasst sind. So kann die Rastermaßbreite b z.B. ein Fünftel oder ein Sechstel der Länge des Schachts 1 gewählt sein.

Das Rasterwandelement 5 ist hingegen ein Wandelement mit der halben Rastermaßbreite b. Die Rasterwandelemente 6, 7, ebenfalls mit einer Breite von b/2, weisen rechteckförmige Rohreinführungsöffnungen 77 und randseitig offene, halbkreisförmige Rohreinführungsöffnungen 33, 34 auf, die, wenn sie benachbart angeordnet sind, eine vollständig kreisförmige Rohreinführungsöffnung ergeben. Das Rasterwandelement 7 weist zusätzlich halbkreisförmige Rohreinführungsöffnungen 35 auf, die mit halbkreisförmigen Rohreinführungsöffnungen 36 des Rasterwandelements 8 eine vollständig kreisförmige Rohreinführungsöffnung ergeben.

Geteilte Rohreinführungsöffnungen sind dann von Vorteil, wenn bestehende Kabel oder Leitungen, ohne sie zu trennen, bei der Errichtung des Schachtes eingebaut werden sollen, so kann ein solches bestehendes Kabel durch die Rasterwandelemente 7, 8 von zwei gegenüberliegenden Seiten her mit den Rohreinführungsöffnungen 35 und 36 umgeben werden.

Die Rastermaßelemente 9, 10 sind ebenfalls in einer halben Rastermaßbreite dimensioniert und weisen jeweils eine halbkreisförmige Rohreinführungsöffnung 37, 38 auf, sodass sie bei benachbarter Anordnung zusammen eine vollständig kreisförmige Rohreinführung ergeben.

Das Rasterwandelement 11 ist ein Eck-Rasterwandelement, das in einen Eckbereich des Schachts 1 einsetzbar ist.

Die Art und Weise wie die unterschiedlichen Rasterwandelemente 4, 5, 6, 7, 8, 9, 10, 11 und die Verbindungsrahmen 20 jeweils kombiniert werden oder die Reihenfolge, wie sie eingebaut werden, ist in den Fig.1 und 2 nur beispielhaft erläutert und keinesfalls darauf beschränkt, vielmehr kann dies im Rahmen des Baukastensystems beliebig an die jeweiligen Bedürfnisse angepasst werden.

Somit ergibt sich, wie aus Fig.1 ersichtlich, durch abwechselndes Übereinander-Anordnen von Verbindungsrahmen 20 und Rasterwandelementen 4, 5, 6, 7, 8, 9, 10, 11 eine Aufeinanderfolge von Rasterwandelementzeilen, die mit Hilfe des Baukastensystems frei wählbar aufgebaut werden können, um Position, Größe und Anzahl der Rohreinführungen beliebig variieren zu können.

In den in Fig. 1 und Fig.2 gezeigten Ausführungsformen sind die Rasterwandelemente 4, 5, 6, 7, 8, 9, 10, 11 des Baukastensystems durch eine Steckverbindung lösbar anbringbar und können in frei wählbarer Anordnung eingesteckt werden.

Im Rahmen der Erfindung können auch andere Formen der Verbindung, z.B. Schraub- oder Nietverbindung od. dgl. vorgesehen sein, um die Rasterwandelemente, aus denen die Schachtwände zusammengesetzt werden, festzulegen.

Um eine sichere Fixierung der Rasterwandelemente 4, 5, 6, 7, 8, 9, 10, 11 in den Wandebenen zu erzielen, sind die parallel zur Bodenplatte 2 angeordneten, zueinander höhenmäßig versetzten Verbindungsrahmen 20 vorgesehen, an denen die Rasterwandelemente 4, 5, 6, 7,8, 9, 10, 11 durch Steckverbindung befestigt sind, wobei die Rasterwandelemente 4, 5, 6, 7, 8, 9, 10, 11 Steckverbinder und die Verbindungsrahmen 20 zu diesem Zweck passende Verbindungsaufnahmen aufweisen, um ein Einstecken der Rasterwandelemente 4, 5, 6, 7, 8 zu ermöglichen.

Gemäß der in Fig.2 gezeigten Ausführungsform können auch mehrere Verbindungsrahmen 20 unmittelbar übereinander angeordnet sein, wenn wie erwähnt höhere Stabilität oder ein besonderer Abstand der Wandebenen eingestellt werden soll.

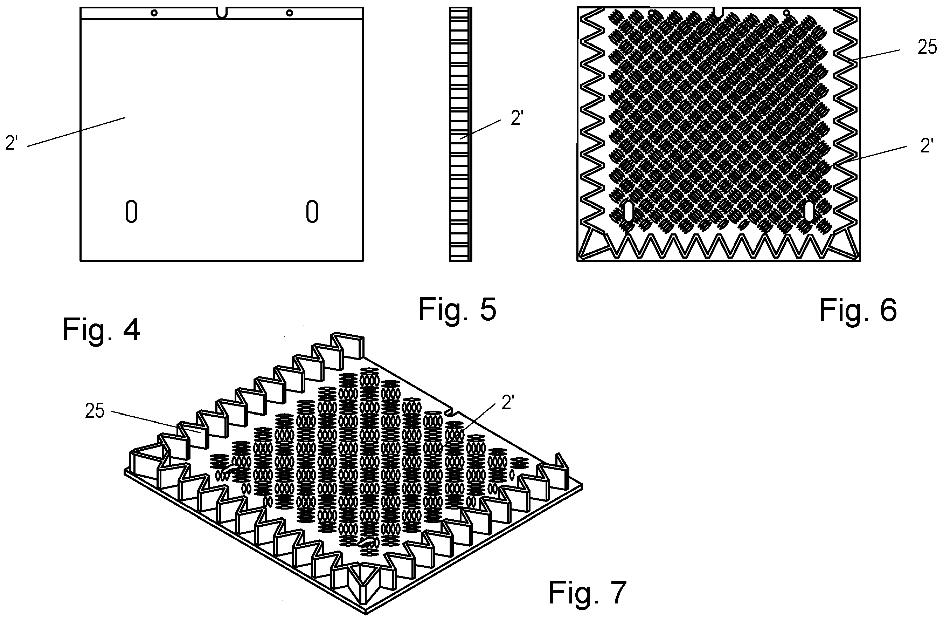

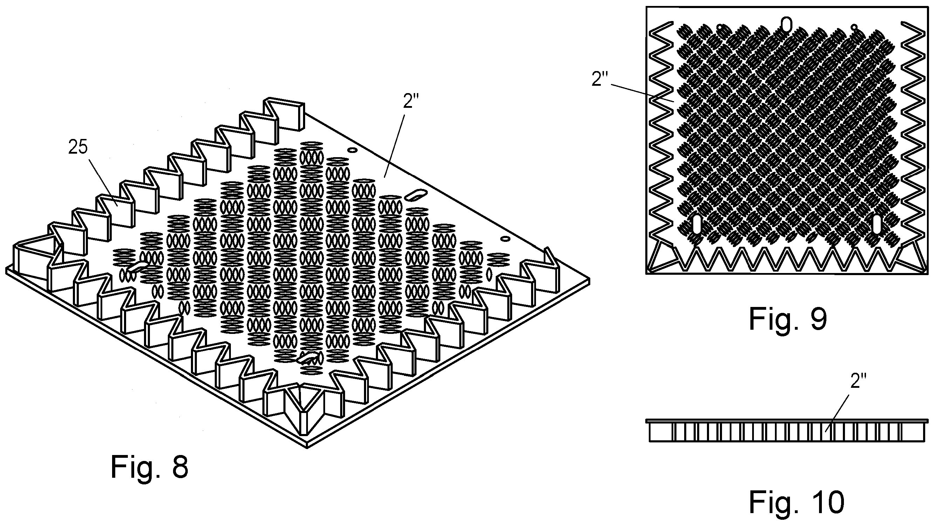

Als Basiselement dient die Bodenplatte 2, die im gezeigten Ausführungsbeispiel gemäß Fig.1 aus zwei Teilen 2', 2" besteht (Fig.3, 7 und 8), die auf einem Untergrund zusammen befestigt werden können, um die vollständige Bodenplatte 2 zu ergeben, auf der ein nach oben vorstehendes dreieckförmiges Wellenprofil 25 entlang des Umfangs vorgesehen ist, auf dem ein erster der Verbindungsrahmen 20 aufgesetzt ist, dessen Außenumfang deckungsgleich mit dem Außenumfang der Bodenplatte 2 ist. Der Innenumfang des Zwischenrahmens 20 entspricht der lichten Weite des Schachts 1.

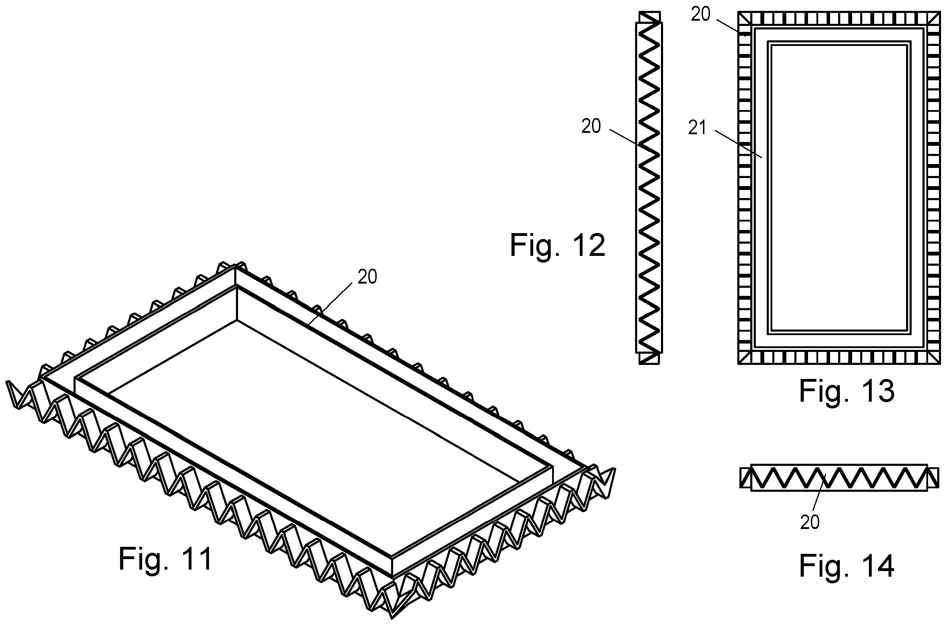

Die Rasterwandelemente 4, 5, 6, 7, 8, 9, 10, 11 weisen Steckverbinder 50 auf (Fig.3), wobei die Verbindungsrahmen 20 eine passende Steckaufnahme 21 aufweisen (Fig.13), sodass die Steckverbinder 50 der Rasterwandelemente 4, 5, 6, 7, 8, 9, 10, 11 mit der Steckaufnahme 21 der Verbindungsrahmen 20 in Eingriff bringbar sind.

Die Steckaufnahme 21 des Verbindungsrahmens 20 ist gemäß Fig.13 eine rechteckige ringförmige Vertiefung, in die die Steckverbinder 50 der Rasterwandelemente 4, 5, 6, 7, 8, 9, 10, 11 einsteckbar sind.

In Fig.3 ist gezeigt, dass die Rasterwandelemente 4, 5, 6, 7, 8, 9, 10, 11 jeweils ein Wandsegment 41, 51, 61, 71, 81, 91, 101, 111 aufweisen, das im eingebauten Zustand zusammen die Außenseiten der Schachtwände 3 ausbilden. Das Baukastensystem beinhaltet sowohl Rasterwandelemente mit Rohreinführungsöffnungen unterschiedlicher Größe und Anzahl, die z.B. in den Wandsegmenten 61, 71, 81, 91, 101, 111 zumindest teilweise ausgenommen sind als auch solche ohne Rohreinführungsöffnungen. Die in Fig.3 gezeigten Rohreinführungsöffnungen oder Teile der Rohreinführungsöffnungen weisen einen kreisförmigen Rand bzw. einen teilkreisförmigen Rand, z.B. einen halbkreisförmigen Rand auf, können aber auch eine andere Geometrie aufweisen.

Manche der Rohreinführungsöffnungen weisen zerstörbare, dünne Abschlusswände auf, die bei Bedarf leicht durchstoßen werden können, um eine Leitung oder ein Kabel hindurchzuführen.

Elemente 36,37 und 38 sind geteilte Dichtungen für den Schachtdeckel 93 und befinden sich im eingebauten Zustand zwischen dem Schachtdeckel 93 und dem Oberseitenrahmen 19 befinden.

Element 39 dient zur Verbindung von zwei Zwischenrahmen 20, um eine geringe Erhöhung zu erreichen, sollte die gewünschte Grabungstiefe nicht erreicht werden.

An der Rückseite der Wandsegmente 41, 51, 61, 71, 81, 91, 101, 111 ist jeweils der Steckverbinder 50 angeordnet, der dreieckförmig gewellt ist und an der Oberseite und Unterseite von dem Wandsegment 41, 51, 61, 71, 81, 91, 101, 111 vorsteht. Die dreieckförmig gewellte Ausbildung der Steckverbinder 50 kann im Rahmen der Erfindung auch davon abweichend ausgeführt sein und ist in keiner Weise darauf beschränkt, es könnten auch beliebige geeignete Steckelemente vorgesehen sein.

Der an der Unterseite des Rasterwandelements 4 vorstehende Steckverbinder 50 wird bei der Montage des erfindungsgemäßen Schachts 1 in die Steckaufnahme 21 des darunter angeordneten Verbindungsrahmens 20 eingesteckt, danach folgen weitere ausgewählte Rasterwandelemente 5, 6, 7, 8, 9, 10, 11, die mit ihren Steckverbindern 50 in den Verbindungsrahmen 20 eingesteckt werden, bis eine ganze Wandebene zusammengebaut ist. Danach wird ein weiterer der Verbindungsrahmen 20 auf die nach oben wegstehenden Steckverbinder 50 aufgesetzt, und die nächsthöhere Wandebene kann in weiterer Folge auf den weiteren Verbindungsrahmen 20 aufgebaut werden. Sobald die gewünschte Höhe des Schachts 1 erreicht ist, wird der Oberseitenrahmen 19 auf den obersten Verbindungsrahmen 20 aufgesetzt, welcher das Wandsegment 9 trägt.

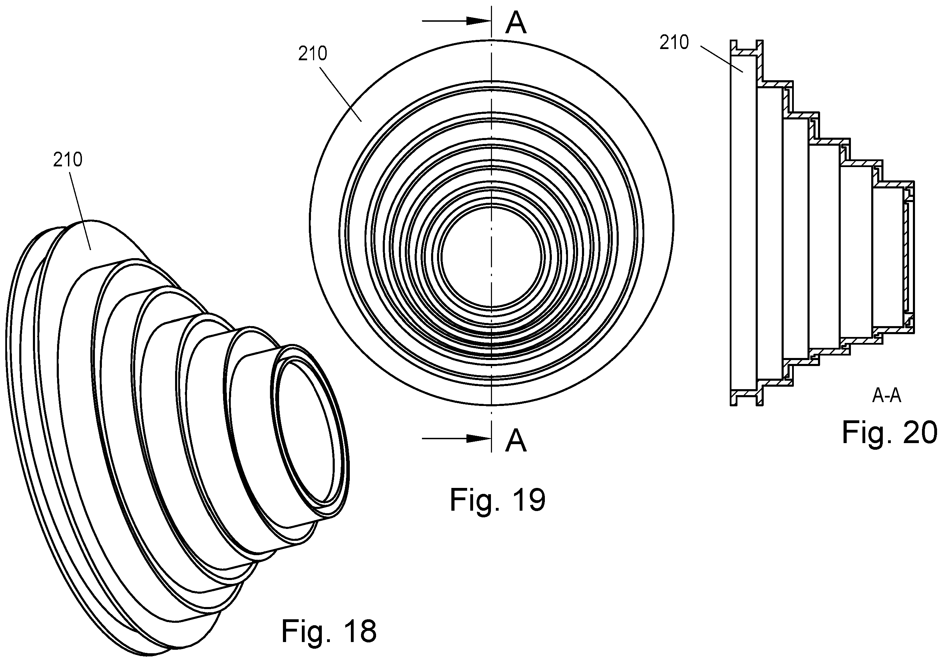

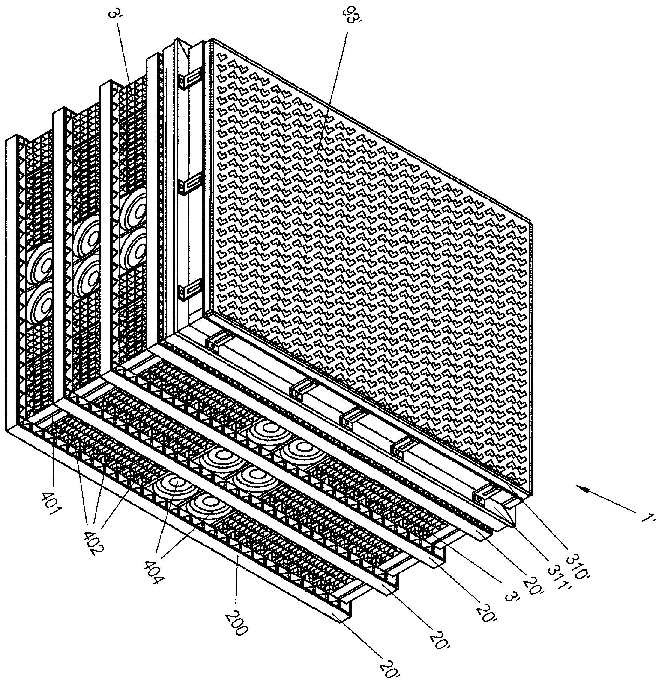

Die Rohreinführungen 210 (Fig.3) der in Fig. 1 und 2 gezeigten Ausführungsformen weisen Rohreinführungszylinder mit abgestuftem Durchmesser auf, die in Fig. 18, 19 und 20 im Detail gezeigt sind. Durch die abgestuften Durchmesser kann der gewünschte Öffnungsdurchmesser durch Herausbrechen der kleineren Zylinderbereiche erzielt werden.

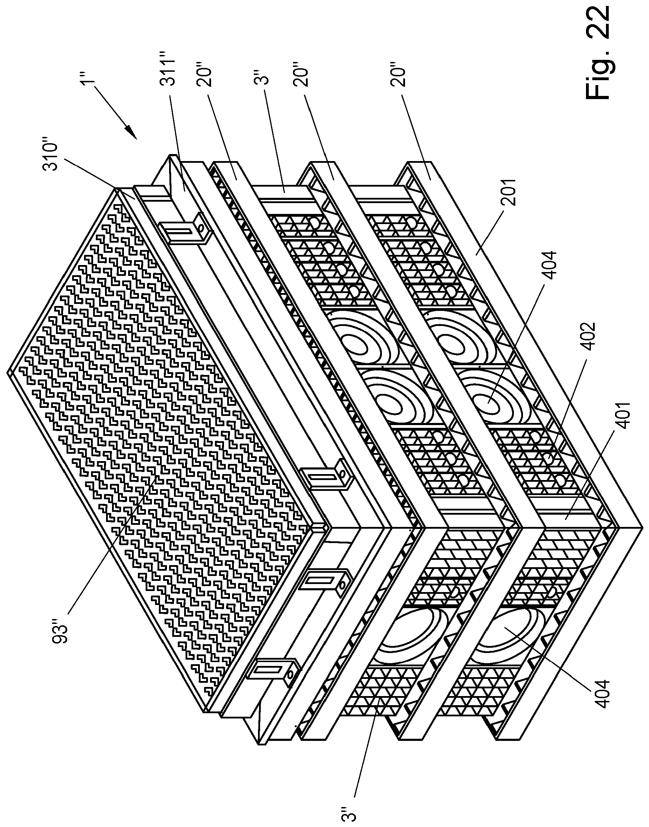

Fig.21 und Fig.22 zeigen jeweils eine weitere Ausführungsform eines erfindungsgemäßen Schachtes 1' bzw. 1" mit einer Bodenplatte 200 bzw. 201 und darauf angeordneten Zeilen von Rasterwandelementen 401, 402, 404, die aus einem zugehörigen, modulartigen Baukastensystem ausgewählt sind, wobei die Anzahl der Zeilen und der Grundriss des Schachtes im Rahmen dieses Baukastensystems frei wählbar sind.

Erfindungsgemäß sind mehrere umlaufende Verbindungsrahmen 20' bzw. 20" vorgesehen, die zueinander höhenversetzt angeordnet sind, wobei die Rasterwandelemente 401, 402, 404 jeweils an ihrer Oberseite und ihrer Unterseite mit einem der Verbindungsrahmen 20' bzw. 20" verbunden sind, um zusammen die vier Wände 3' bzw. 3" des Schachts 1'bzw. 1" auszubilden. Für die drei Rasterwandelement-Zeilen sind im Ausführungsbeispiel gemäß Fig.21 insgesamt vier Verbindungsrahmen 20' und für die Zeilen gemäß Fig.22 insgesamt drei Verbindungsrahmen 20" vorgesehen.

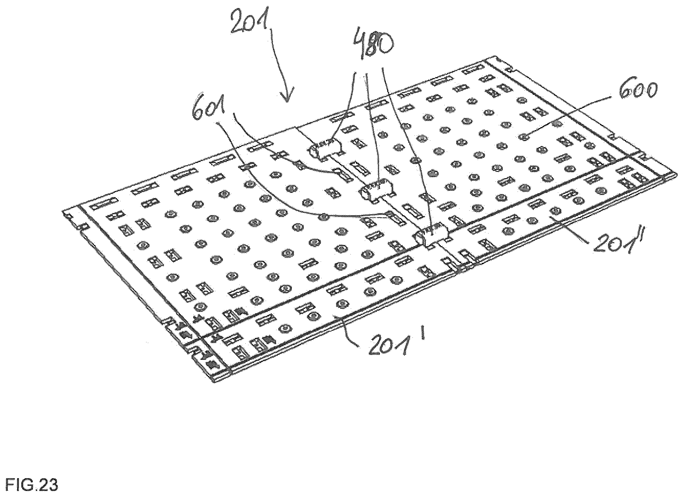

Bestandteile des zugehörigen modularen Baukastensystems der Ausführungsform gemäß Fig. 21 sowie Fig. 22 sind in den Fig. 23, 24, 25, 26, 30, 31, 32, 33, 37, 38, 39, 40, 41 und 42 dargestellt, wobei das modulare Baukastensystem je nach Bedarf jeweils mehrere Stück pro Bauart aufweist, um die Schachtwände 3', 3" des erfindungsgemäßen Schachts 1' bzw. 1" vollständig zusammensetzen zu können.

Die Rasterwandelemente 401, 402, 404 sind durch Steckverbindungen mit den Verbindungsrahmen 20' bzw. 20" lösbar verbunden. Die Verbindungsart könnte, wie bereits im Zusammenhang mit dem Ausführungsbeispiel gemäß Fig.1 und 2 erwähnt im Rahmen der Erfindung auch anders ausgeführt sein.

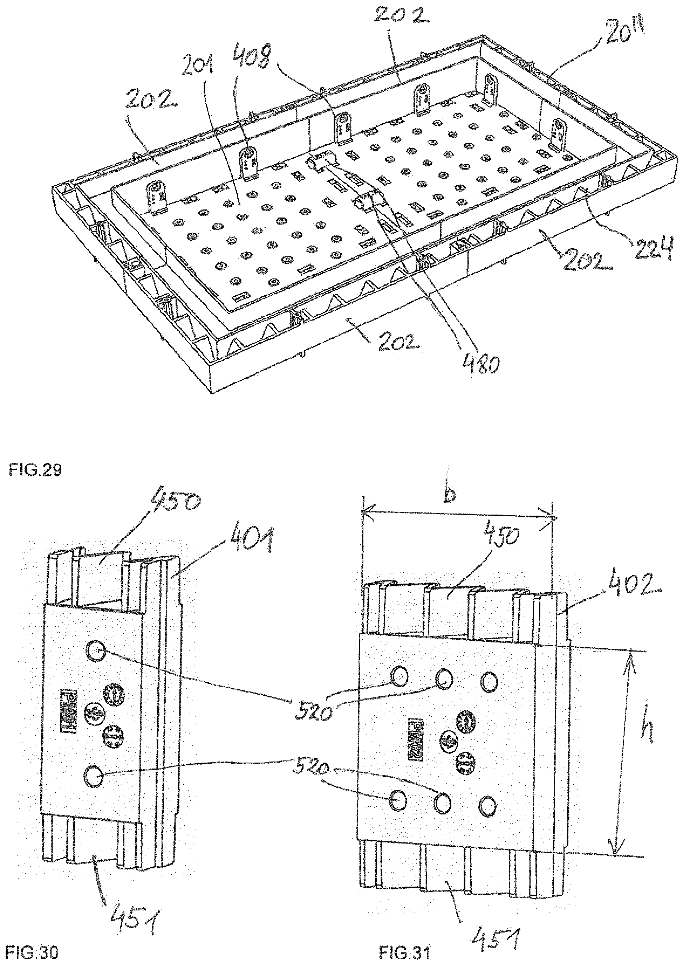

Die Fig.30, 31, 33, 34, 35, 39 und 42 zeigen die Rasterwandelemente 401, 402, 403, 404 im Detail, die jeweils an ihrer Oberseite und an ihrer Unterseite Steckverbinder 450, 451 aufweisen, die dreieckförmig gewellt sind und in passende Steckaufnahmen der Verbindungsrahmen 20', 20" steckbar sind, sodass sie eine form- und reibschlüssige Verbindung eingehen.

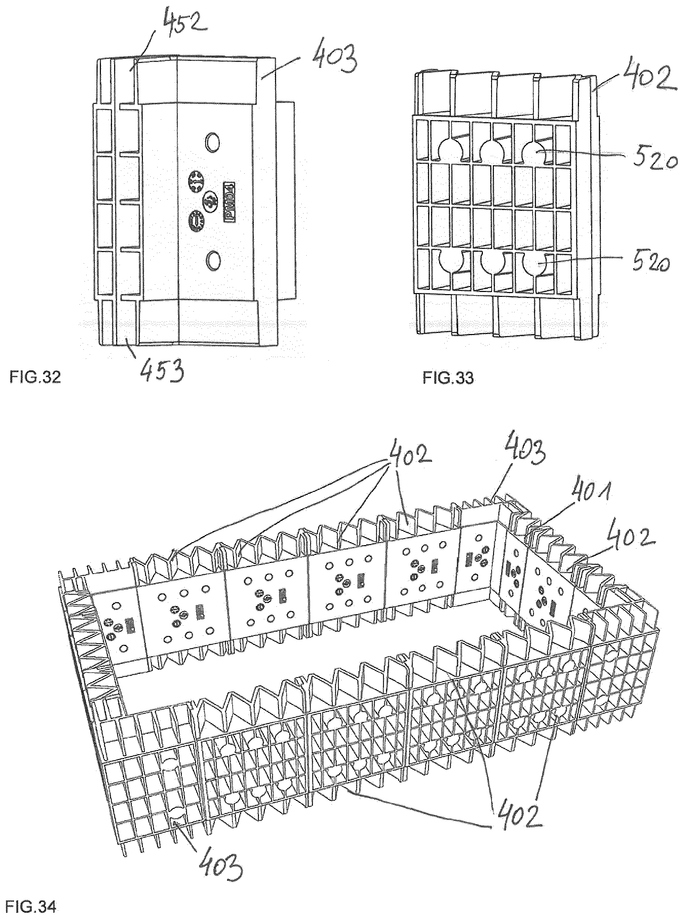

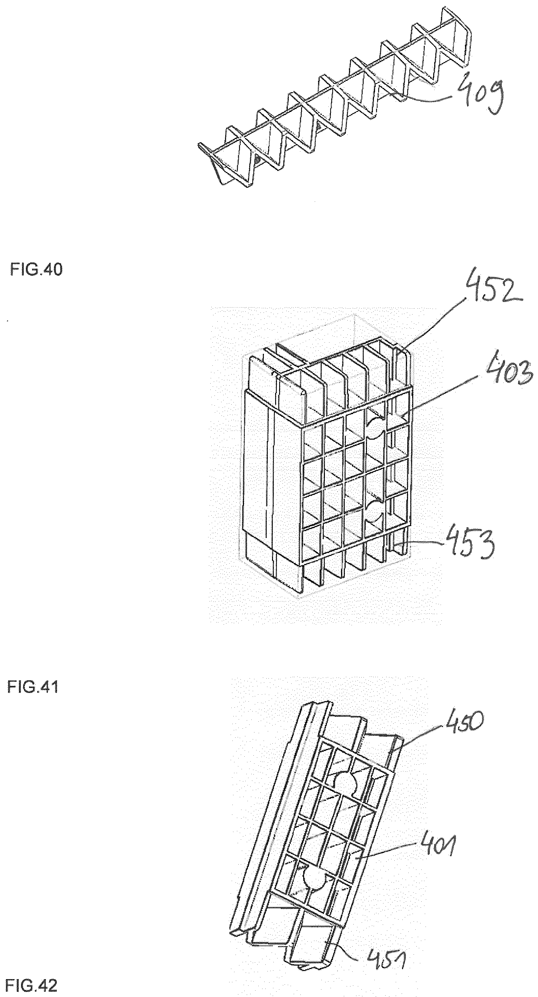

In den Fig.32 und Fig. 41 ist ein Eck-Rasterwandelement 403 gezeigt, das an seiner Oberseite und seiner Unterseite ebenfalls Steckverbinder 452 bzw. 453 aufweist, diese sind aber durch parallele Rippen realisiert und passen ebenso form- und reibschlüssig in die Steckaufnahmen der Verbindungsrahmen 20', 20".

Weiters ist eine abnehmbare Deckelplatte 93', die einstückig, z.B. aus Gusseisen DIN EN 124, ausgebildet ist, oberhalb des obersten Verbindungsrahmens 20' vorgesehen. Die Deckelplatte 93' kann in ihrer Gestaltung an die Erfordernisse angepasst sein, z.B. aus Kunststoff oder ausbetoniert oder auspflasterbar sein. Gleiches gilt für die Deckelplatte 93".

Das Rasterwandelement 402 (Fig.31, 33) ist ein Wandelement mit einer vorbestimmbaren Rastermaßbreite b und einer Einheitshöhe h, welche Maße an die jeweiligen Gegebenheiten angepasst sind. Das Rasterwandelement 402 weist an seiner dem Schachtinneren zugewandten Innenseite eine vollfächige Wand und an seiner Außenseite eine mit rasterförmigen Fächern ausgebildete Versteifung auf.

Das Rasterwandelement 401 (Fig.30) ist hingegen ein Wandelement mit der halben Rastermaßbreite b und dient zur feineren Unterteilung des Baukastensystems.

Sowohl das Rasterwandelement 401 als auch das Rasterwandelement 402 weisen durchstoßbare kreisförmige Öffnungen 520 auf, die als Kabel- oder Drahtdurchführungen verwendbar sind.

Somit ergibt sich, wie aus Fig.21 und 22 ersichtlich, durch abwechselndes Übereinander-Anordnen von umlaufenden Verbindungsrahmen 20' bzw. 20" und Rasterwandelementen 401, 402, 404 eine Aufeinanderfolge von Rasterwandelementzeilen, die mit Hilfe des Baukastensystems frei wählbar aufgebaut werden können, um Position, Größe und Anzahl der Rohreinführungen beliebig variieren zu können.

Je nach Grundriss des Schachtes 1' bzw. 1" ist die in den Maßen entsprechend angepasste Deckelplatte 93' bzw. 93" auf einen passenden Deckelrahmen 310' bzw. 310", z.B. aus feuerverzinktem Stahl mit Elastomerauflage, aufgesetzt. Um eine Höhenverstellbarkeit zum Zwecke der Niveauanpassung zu gewährleisten ist zudem ein Kopfrahmen 311' bzw. 311", z.B. aus feuerverzinktem Stahl mit stufenloser Höhenverstelleinheit (nicht dargestellt) unterhalb der Deckelplatte 93' bzw. 93" angeordnet.

Der auf den Kopfrahmen 311' aufgesetzte Deckelrahmen 310' mit Deckelplatte 93' kann in seinem Höhenabstand zum Kopfrahmen 311' eingestellt werden, um Niveauunterschiede, z.B. gegenüber dem Straßenbelag auszugleichen.

In der Ausführungsform des erfindungsgemäßen Schachtes 1", gemäß Fig.22 ist an unterster Stelle eine Bodenplatte 201 vorgesehen, die in Fig. 23 im Detail gezeigt und aus zwei rechteckigen Plattenelementen 201', 201" zusammengesetzt ist. Die Plattenelemente 201', 201" weisen Öffnungen für den Wasserablauf 600 und Verbindungsstecköffnungen 601 auf, in welche Steckverbindungselemente 480 einsteckbar sind, z.B. um die zwei Plattenelemente 201', 201" zu der Bodenplatte 201 zu verbinden. Auf diese Weise kann die Bodenplatte 201 je nach Bedarf aus zwei oder mehreren Plattenelementen 201', 201" zusammengebaut werden.

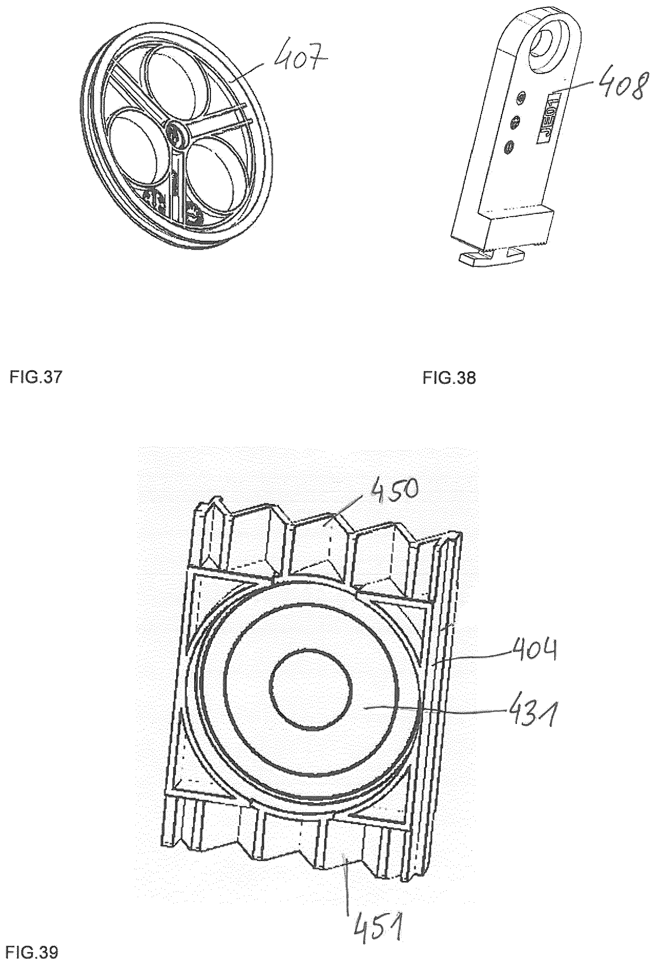

Weitere Steckverbindungselemente 408 (Fig.38) können eingesteckt sein, um eine Verbindung mit dem untersten Verbindungsrahmen 20" herzustellen, wie dies in Fig.29 gezeigt ist.

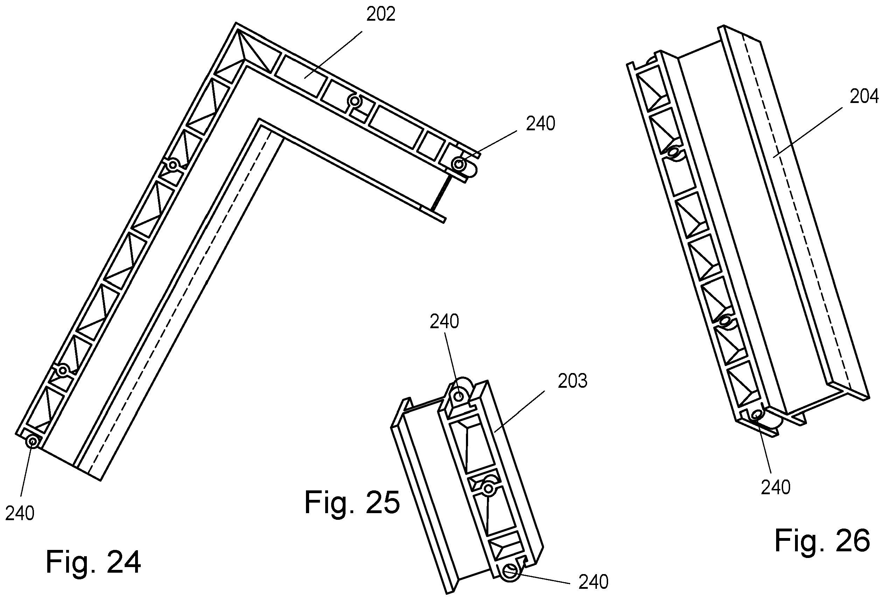

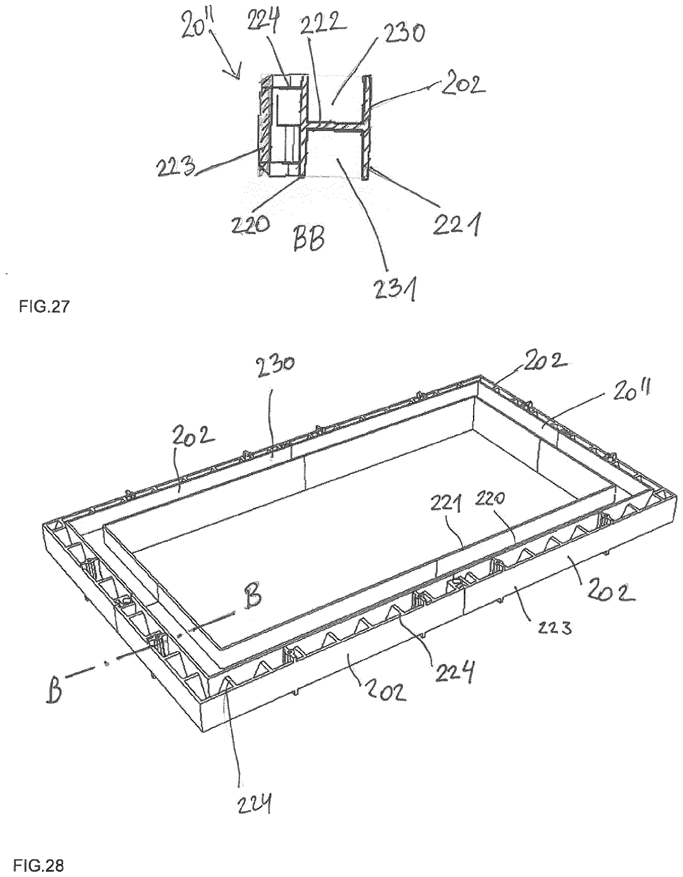

Fig.28 zeigt den untersten Verbindungsrahmen 20", der sich aus vier Winkelteilrahmen 202 (Fig. 24) zusammensetzt. Fig.25 und Fig.26 zeigen weitere Winkelteilrahmen 203, 204 des Baukastensystems, die einen variablen Zusammenbau der Verbindungsrahmen 20', 20" ermöglichen. An den Enden der Winkelteilrahmen 202, 203, 204 sind jeweils Verbindungsvorsprünge 240 mit Stecköffnungen zum Einsetzen von (nicht dargestellten) Verbindungssteckelementen vorgesehen, die eine Verbindung der Winkelteilrahmen 202, 203, 204 mit jeweils anderen Winkelteilrahmen ermöglichen. Im Rahmen der Erfindung kann aber jede andere dem Fachmann bekannte Verbindungsart zur Anwendung gelangen.

Fig.27 zeigt einen Querschnitt BB des umlaufenden Verbindungsrahmens 20", der einen H-förmigen Querschnitt mit zwei Flanschwänden 220, 221 und einem Steg 222 umfasst, wobei die Flanschwände 220, 221 eine obere und eine untere Steckaufnahme 230, 231 ausbilden, die durch den Steg 222 voneinander getrennt sind.

An der Außenseite des Querschnitts der Teilrahmen ist zur Verbesserung der Belastbarkeit des Verbindungsrahmens 2" eine parallele Versteifungswand 223 angeordnet, die über einen dreieckwellenförmigen Querverbindungssteg 224 mit der äußeren Flanschwand 220 des Verbindungsrahmens 20" verbunden ist.

In der Schrägansicht von Fig.28 ist - für den zusammengesetzen Verbindungsrahmen 20" - die obere umlaufende Steckaufnahme 230 für das Einstecken der Steckverbinder 451 an der Unterseite der Rasterwandelemente 401,402,403,404 gezeigt, um den Aufbau einer Zeile von Rasterwandelementen vorzunehmen. Auf die Steckverbinder 452 an der Oberseite der Wandelemente 401,402, 403, 404 wird dann in weiterer Folge der darüber anzuordnende Verbindungsrahmen gesteckt.

Fig.29 zeigt den Verbindungsrahmen 22" in einem Zustand, in dem dieser bereits auf die Bodenplatte 201 aufgesetzt und mit dieser über die Steckverbindungselemente 480 verbunden ist.

Fig.34 zeigt eine aus den Raster-Wandelementen 401, 402, 403 zusammengebaute beispielhafte Zeile an Raster-Wandelementen.

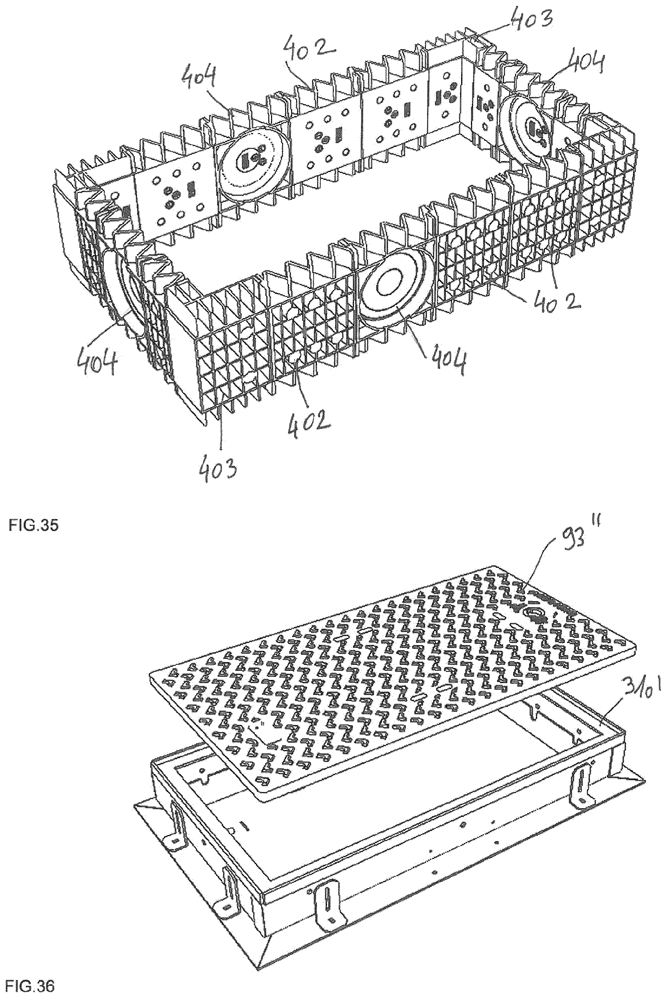

Fig.35 zeigt eine weitere mögliche Kombination von Raster-Wandelementen 402, 403, 404, aus denen eine beispielhafte Wandelementzeile für einen erfindungsgemäßen Schacht zusammengesetzt ist, die im fertiggestellten Zustand an ihrer Unterseite und an ihrer Oberseite in die Aufnahmen von Verbindungsrahmen gesteckt ist.

Das Rasterwandelement 404 (Fig.39) weist dabei eine relativ große kreisförmige Vertiefung 431 für eine Rohrdurchführungsöffnung auf, die mit einer durchstoßbaren Wand versehen ist, die bei Bedarf durchstoßen wird. Dieses Wandelement 404 kann entsprechend den räumlichen Umständen am jeweils günstigen Ort angeordnet werden, um ein Kabel oder eine Leitung hindurchzuführen. Anstelle dieses Wandelements 404 können aber auch geteilte Rasterwandelemente wie bei den Ausführungsbeispielen gemäß Fig.1 und 2 vorgesehen sein, um bestehende Kabel oder Leitungen einzubringen.

Das Baukastenelement 407 bietet die Möglichkeit der Einsetzbarkeit in die kreisförmige Vertiefung 431 des Wandelements 404, um dieses in drei kleinere Durchführungsöffnungen zu unterteilen.

Das Baukastenelement 409 weist eine längliche Wand mit dreieckförmig gewellten Steckverbindern auf gegenüberliegenden Seiten der Wand auf und es kann der Verbindung zwischen zwei übereinander angeordneten Rahmen dienen, z.B. um einen obersten Verbindungsrahmen 20" mit einem Kopfrahmen 311" zu verbinden. Die Anzahl von unterschiedlichen Elementen des Baukastensystems unterliegt keinerlei Einschränkungen.

## Patentansprüche

1. Schacht (1, 1', 1") mit einer Bodenplatte (2, 200, 201), Schachtwänden (3, 3', 3") und einer Deckelplatte (93, 93', 93") zum Verschließen des Schachts (1, 1', 1"), wobei die Schachtwände (3, 3', 3") aus einer Vielzahl von Rasterwandelementen (4, 5,... 11; 401, 402, 403, 404), die in Zeilen übereinander angeordnet und aus einem modulartigen Baukastensystem auswählbar sind, zusammengesetzt sind, wobei ein Teil der Rasterwandelemente (4, 5, .... 11; 401, 402, 403, 404) zumindest eine Rohreinführungsöffnung (33, 34, 35, 36, 37, 38; 431) aufweist, sodass die Position, Anzahl und Größe von Rohreinführungen in den Schachtwänden (3) durch entsprechende Anordnung der Rasterwandelemente (4, 5, ..... 11; 401, 402, 403, 404) frei wählbar ist, wobei mehrere umlaufende Verbindungsrahmen (20, 20', 20") vorgesehen sind, die zueinander höhenversetzt angeordnet sind, wobei die Rasterwandelemente (4, 5, ...11; 401, 402, 403, 404) jeweils an ihrer Oberseite und ihrer Unterseite mit einem der Verbindungsrahmen (20, 20', 20") verbunden sind, wobei die Rasterwandelemente (4, 5,...11; 401, 402, 403, 404) durch Steckverbindungen mit den Verbindungsrahmen verbunden sind, und wobei die Rasterwandelemente (4, 5, .... ) jeweils an ihrer Oberseite und an ihrer Unterseite Steckverbinder (450, 451) aufweisen, die in passende Steckaufnahmen (230, 231) der Verbindungsrahmen (20, 20, 20‴) gesteckt sind, wobei die umlaufenden Verbindungsrahmen (20', 20") einen H-förmigen Querschnitt mit zwei Flanschwänden (220, 221) und einem Steg (222) umfassen, wobei die Flanschwände (220, 221) eine obere und eine untere Steckaufnahme (230, 231) ausbilden, die durch den Steg (222) voneinander getrennt sind, wobei die Steckverbinder (450) der Rasterwandelement-Unterseite in die obere Steckaufnahme (230) steckbar sind und die Steckverbinder (451) der Rasterwandelement-Oberseite in die untere Steckaufnahme (231) steckbar sind.

2. Schacht nach Anspruch 1, **dadurch gekennzeichnet, dass** die Steckverbinder (450, 451) dreieckförmig gewellt ausgebildet sind.

3. Schacht nach Anspruch 1 oder 2, **dadurch gekennzeichnet, dass** an der außenseitigen Flanschwand (220) des Verbindungsrahmens (20") ein Versteifungselement vorgesehen ist.

4. Schacht nach Anspruch 3, **dadurch gekennzeichnet, dass** das Versteifungselement durch eine parallel zur außenseitigen Flanschwand (220) angeordnete Versteifungswand (223) ausgebildet ist, die durch einen Versteifungssteg (224) mit der außenseitigen Flanschwand verbunden ist.

5. Schacht nach Anspruch 4, **dadurch gekennzeichnet, dass** der Versteifungssteg (224) dreieckförmig gewellt ist.

6. Schacht nach einem der Ansprüche 1 bis 5, **dadurch gekennzeichnet, dass** die Verbindungsrahmen (20') aus mehreren Rahmenteilen (202, 203, 204) zusammensetzbar ausgebildet sind.

## Claims

1. A manhole (1, 1', 1") with a base plate (2, 200, 201), manhole walls (3, 3', 3"), and a cover plate (93, 93', 93") for covering the manhole (1, 1', 1"), the manhole walls (3, 3', 3") being composed of a plurality of grid-like wall elements (4, 5, ... 11; 401, 402, 403, 404) arranged in rows one above the other and selectable from a modular system, wherein a part of the grid-like wall elements (4, 5, .... 11; 401, 402, 403, 404) has at least one conduit insertion opening (33, 34, 35, 36, 37, 38; 431) so that the position, number, and size of conduit insertions into the manhole walls (3) are freely selectable by correspondingly arranging the grid-like wall elements (4, 5, ... 11; 401, 402, 403, 404), wherein several circumferential connecting frames (20, 20', 20") are provided, which are arranged at different heights, wherein the grid-like wall elements (4, 5, ... 11; 401, 402, 403, 404) are each connected on their top sides and bottom sides with one of the connecting frames (20, 20', 20"), wherein the grid-like wall elements (4, 5, ... 11; 401, 402, 403, 404) are connected with the connecting frames via fit connections, and wherein the grid-like wall elements (4, 5, ...) each have fit connectors (450, 451) on their top sides and bottom sides, which are fit into suitable fit receptacles (230, 231) of the connecting frames (20, 20, 20‴), wherein the circumferential connecting frames (20', 20") comprise an H-cross-section with two flange walls (220, 221) and one web (222), wherein the flange walls (220, 221) form upper and lower fit receptacles (230, 231) separated by the web (222), wherein the fit connectors (450) of the grid-like wall element bottom side are fittable into the upper fit receptacle (230) and the fit connectors (451) of the grid-like wall element top side are fittable into the lower fit receptacle (231).

2. The manhole according to claim 1, **characterized in that** the fit connectors (450, 451) are formed triangularly corrugated.

3. The manhole according to claim 1 or 2, **characterized in that** a stiffening element is provided on the external flange wall (220) of the connecting frame (20").

4. The manhole according to claim 3, **characterized in that** the stiffening element is formed by a stiffening wall (223) arranged parallel with the external flange wall (220), which wall is connected to the external flange wall via a stiffening web (224).

5. The manhole according to claim 4, **characterized in that** the stiffening web (224) is triangularly corrugated.

6. The manhole according to any one of the claims 1 to 5, **characterized in that** the connecting frames (20') are formed so that they can be assembled from several frame parts (202, 203, 204).

## Revendications

1. Puits (1, 1', 1") ayant une plaque de fond (2, 200, 201), des parois de puits (3, 3', 3") et une plaque de couverture (93, 93', 93") pour fermer ledit puits (1, 1', 1"), lesdites parois de puits (3, 3', 3") étant assemblées à partir d'une pluralité d'éléments de parois en réseau (4, 5, ... 11; 401, 402, 403, 404), qui sont disposés en lignes l'un sur l'autre et peuvent être choisis parmi un système d'assemblage modulaire, une partie desdits d'éléments de parois en réseau (4, 5, ... 11; 401, 402, 403, 404) présentant au moins une ouverture d'entrée de tuyau (33, 34, 35, 36, 37, 38 ; 431), de sorte que la position, le nombre et la dimension d'entrées de tuyau dans lesdites parois de puits (3) puissent être sélectionnés librement en disposant lesdits éléments de parois en reseau (4, 5, ... 11; 401, 402, 403, 404) de façon conforme, plusieurs cadres de couplage (20, 20', 20") circonférentiels, décalés entre eux en hauteur, étant prévus, lesdits éléments de parois en reseau (4, 5, ... 11; 401, 402, 403, 404) étant couplés, respectivement par leur face supérieure et leur face inférieure, à un parmi lesdits cadres de couplage (20, 20', 20"), lesdits éléments de parois en reseau (4, 5, ... 11; 401, 402, 403, 404) étant couplés audit cadre de couplage grâce à des connexions enfichables, et lesdits éléments de parois en reseau (4, 5, ...) présentant, respectivement à leur face supérieure et leur face inférieure, des connecteurs (450, 451), qui sont enfichés dans des douilles (230, 231) adaptées dudit cadre de couplage (20, 20', 20"), lesdits cadres de couplage (20', 20") circonférentiels comportant une section en H avec deux parois à collerette (220, 221) et une barrette (222), lesdites parois à collerette (220, 221) formant une douille supérieure et une douille inférieure (230, 231), qui sont séparées par ladite barrette (222), les connecteurs (450) de ladite face inférieure desdits éléments de parois en reseau pouvant être enfichés dans ladite douille supérieure (230) et lesdits connecteurs (451) de ladite face supérieure desdits éléments de parois en reseau pouvant être enfichés dans ladite douille inférieure (231).

2. Puits selon la revendication 1, **caractérisé en ce que** lesdits connecteurs (450, 451) présentent une forme triangulaire ondulée.

3. Puits selon les revendications 1 ou 2, **caractérisé en ce qu'**un élément de raidissement est prévu sur ladite paroi (220) extérieure dudit cadre de couplage (20").

4. Puits selon la revendication 3, **caractérisé en ce que** ledit élément de raidissement est formé par une paroi de raidissement (223) parallèle à ladite paroi à collerette (220) extérieure et couplée à ladite paroi à collerette (220) par une barrette de raidissement (224).

5. Puits selon la revendication 4, **caractérisé en ce que** ladite barrette de raidissement (224) présente une forme triangulaire ondulée.

6. Puits selon l'une quelconque parmi les revendications 1 à 5, **caractérisé en ce que** lesdits cadres de couplage (20') sont formés de façon à ce qu'ils puissent être assemblés à partir de plusieurs parties de cadre (202, 203, 204).
